# EUROPÄISCHE PATENTSCHRIFT

(11) **EP 2 691 229 B1**
(45) Veröffentlichungstag und Bekanntmachung des Hinweises auf die Patenterteilung: **03.05.2017**
(21) Anmeldenummer: 12714953.2
(22) Anmeldetag: 30.03.2012
(51) Int. Cl.: B29L 31/42, B29C 45/16

(54) **WERKZEUG ZUM SPRITZGIESSEN VON GEGENSTÄNDEN**
TOOL FOR INJECTION-MOULDING ARTICLES
OUTIL POUR LE MOULAGE PAR INJECTION D'OBJETS

(30) Priorität: 30.03.2011 DE 102011015568
(43) Veröffentlichungstag der Anmeldung: 05.02.2014
(73) Patentinhaber: GB Boucherie NV, 8870 Izegem (BE)
(72) Erfinder: BOUCHERIE, Bart, Gerard, B-8870 Izegem (BE)
(74) Vertreter: Prinz & Partner mbB
(86) Internationale Anmeldenummer: PCT/EP2012/001420
(87) Internationale Veröffentlichungsnummer: WO 2012/130469

(56) Entgegenhaltungen:
- EP-A1- 2 191 951
- EP-A1- 2 324 980
- DE-A1- 10 121 691
- DE-A1- 19 542 102
- DE-A1-102004 022 821
- DE-A1-102006 037 954
- GB-A- 193 174

## Beschreibung

Die Erfindung betrifft ein Werkzeug zum Spritzgießen von Gegenständen verschiedener Art, vorwiegend (aber nicht ausschließlich) von Gebrauchsgegenständen wie Zahnbürstenkörper, Schreibgeräte, Griffteile und dergleichen, die aufgrund funktioneller oder gestalterischer Anforderungen aus mehreren Kunststoffkomponenten gespritzt werden.

Derartige Werkzeuge haben generell einen düsenseitigen feststehenden Formblock, an dem für jede zu spritzende Komponente eine Gruppe von Teilkavitäten gebildet ist, einem auswerfseitigen beweglichen Formblock, an dem entsprechende Gruppen von Teilkavitäten gebildet sind, die bei geschlossenem Werkzeug mit den Teilkavitäten des feststehenden Formblocks Kavitäten zum Spritzgießen der Gegenstände bilden, und einer Auswerfstation, die außerhalb der Formblöcke gelegen ist. Zwischen den Gruppen von Kavitäten und der Auswerfstation werden die Spritzlinge mittels Haltern umgesetzt, die z.B. bei Zahnbürstenkörpern sog. Kopfeinsätze bilden, die in Ausnehmungen des auswerfseitigen Formblocks eingesetzt werden und Teilbereiche der Teilkavitäten entsprechend dem Kopfbereich eines Zahnbürstenkörpers bilden. Werkzeuge dieser Art sind beispielsweise in der DE 102 08 599 A1 oder der DE 20 2006 017 919 U1 gezeigt. Diese Halter werden von einem Antriebsmechanismus mit fest vorgegebenen linearen oder rotatorischen gleichmäßig großen Indexschritten von der ersten Gruppe von Kavitäten zur nächsten bis zur Auswerfstation und wieder zurück zur ersten Gruppe von Kavitäten positioniert.

Die nachveröffentlichte EP 2 324 980 A1 offenbart, die einzelnen Positionen in einem Spritzgußwerkzeug verändern zu können. Hierzu werden die Halter für die Kavitäten mit Motoren angetrieben, die gesteuert werden. Somit können die Motoren zu unterschiedlichen Zeitpunkten und mit unterschiedlichen Geschwindigkeiten bewegt werden.

Gleich, aus welcher Anzahl von Komponenten ein Gegenstand zu spritzen ist, auch wenn es nur eine Komponente ist, gelten für die Anspritzstelle einer Komponente innerhalb einer Kavität Vorgaben, die durch den zu spritzenden Gegenstand bestimmt werden. Entsprechend sind die Positionen der Düsen und die Auslegung des zugehörigen Heißkanalsystems durch die zu spritzenden Gegenstände vorgegeben. Zwar können mit einem gegebenen Werkzeug unterschiedliche Gegenstände gespritzt werden, indem auswechselbare Formplatten verwendet werden; jedoch müssen sich die Anspritzstellen in den Kavitäten immer an der gleichen Stelle befinden, sodass letztlich mit einem vorhandenen Werkzeug nur Gegenstände hergestellt werden können, die gestalterisch oder funktionell sehr ähnlich sind.

Mit dem erfindungsgemäßen Werkzeug wird diese Limitierung überwunden, da die Anspritzstellen relativ zu den Kavitäten variiert werden können, indem die Position der Kavitäten relativ zu den fest durch das Werkzeug vorgegebenen Anspritzstellen entsprechend dem zu spritzenden Gegenstand variiert wird. Ermöglicht wird dies durch ein programmierbares Antriebssystem, das den oder die Halter bewegt, wobei die individuelle Position des Halters in jeder Spritzstation und in der Auswerfstation durch Umprogrammieren des Antriebssystems frei programmierbar und frei einstellbar ist und entsprechend dem mit dem Werkzeug herzustellenden Gegenstand einprogrammiert wird. Somit ist es erstmalig möglich, ein vorhandenes Werkzeug für ganz verschiedene herzustellende Gegenstände zu verwenden, indem lediglich die Formplatten getauscht werden und das Antriebssystem für die Halter umprogrammiert wird, ohne dass zum Beispiel Festanschläge oder dergleichen umjustiert werden müssen oder überhaupt zur Positionierung des Halters nötig sind. Der bisher stets gleich große, festgelegte Verfahrweg zwischen benachbarten Stationen ist nicht mehr nötig. Die Verfahrwege zwischen den Stationen (Indexschritte) können unterschiedlich und beliebig sein, was mehr Freiheit bei der Positionierung der Teilkavitäten und der Ausgestaltung des Designs des Gegenstands gibt. Erfindungsgemäß sind am feststehenden Formblock auswechselbare, die Teilkavitäten aufweisende Formplatten vorgesehen, wobei durch die Positionierung der Formplatten an den Formblöcken relativ zu den Spritzdüsen die Position der durch die Spritzdüsen fest vorgegebenen Anspritzstellen relativ zu den Kavitäten einstellbar sind. Durch die Programmierbarkeit des Antriebssystems ist gewährleistet, dass der bzw. die Halter die entsprechenden Positionen der Kavitäten am beweglichen Formblock anfahren können. Auf diese Weise kann bei Verwendung eines im Grundaufbau unveränderten Werkzeugs mit vorgegebenen Düsen am feststehenden Formblock eine Vielfalt von unterschiedlich gestalteten Gegenständen gespritzt werden.

Grundsätzlich ist das erfindungsgemäße Werkzeug auch vorteilhaft, wenn Gegenstände aus nur einer Komponente gespritzt werden. Allerdings kommen die Vorteile des erfindungsgemäßen Konzepts erst voll zum Tragen, wenn Gegenstände aus zwei oder mehr Komponenten gespritzt werden. Dann nämlich werden mit der herkömmlichen Technik die Möglichkeiten gestalterischer Änderungen der Gegenstände bei gleichem Werkzeug umso stärker eingeschränkt, desto mehr Komponenten gespritzt werden. Daher sind bei der bevorzugten Ausführungsform mehrere Gruppen von Kavitäten vorhanden, und jede Gruppe von Kavitäten bildet eine Spritzstation, wobei in den Spritzstationen jeweils verschiedene Komponenten gespritzt werden.

Pro Spritzstation sollte ein Halter vorgesehen sein und ein weiterer Halter für die Auswerfstation. Das Antriebssystem bewegt die Halter programmgesteuert zwischen den Spritzstationen und der Auswerfstation.

Vorzugsweise ist stets ein Antrieb einer Station zugeordnet. Der Antrieb steht entweder fest und taktet die Halter von Station zu Station aus individuell programmierbaren Anfangspositionen in individuell programmierbare Endpositionen, oder der Antrieb fährt mit einem Halter mit und bleibt individuell programmierbar für jede Station an einer Zielposition stehen.

Besonders vorteilhaft ist eine Ausführungsform des Werkzeugs, bei der die Spritzstationen und die Auswerfstation senkrecht übereinander angeordnet sind. Ein erster Vorteil ist die geringe Stellfläche des Werkzeugs, das äußerst kompakt aufgebaut werden kann. Bei gegebener Größe der Formplatte können sehr viele Kavitäten bzw. Gruppen von Kavitäten eingearbeitet werden. Ein zweiter Vorteil ist die hängende Anordnung der Formlinge an den Haltern beim Transport zwischen den verschiedenen Stationen des Werkzeugs. Die Formlinge sind beim Ausformen noch warm und je nach Beschaffenheit verformbar. Durch die senkrecht hängende Anordnung der Formlinge können die Wartezeiten bis zum Umlegen in die nächste Station verkürzt werden. Dieser Vorteil kommt besonders bei relativ dicken Formlingen zum Tragen, da diese sich unter ihrem Eigengewicht leichter verformen können, wenn sie z.B. auf einer Kreisbahn bewegt werden, wie dies bei herkömmlichen Werkzeugen der Fall ist. Schließlich befindet sich die Auswerfstation bevorzugt außerhalb der Formblöcke, sodass die fertig gespritzten Gegenstände entnommen werden können, während das Werkzeug geschlossen ist, also während eines Spritzzyklus.

Weitere Merkmale und Vorteile der Erfindung ergeben sich aus den Unteransprüchen sowie aus der nachfolgenden Beschreibung einer besonderen Ausführungsform unter Bezugnahme auf die beigefügten Zeichnungen. In den Zeichnungen zeigen:
- Figur 1 eine Perspektivansicht des Werkzeugs im geöffneten Zustand;
- Figur 2 eine Perspektivansicht des Werkzeugs im geschlossenen Zustand;
- Figur 3 Perspektivansichten zweier Ausführungen eines aus drei Komponenten gespritzten Gegenstands in den drei Spritzvorgängen;
- Figur 4 eine schematische Schnittansicht des Werkzeugs für eine der beiden Ausführungen des Gegenstands gemäß Figur 3;
- Figur 5 eine schematische Schnittansicht des Werkzeugs für die andere der beiden Ausführungen des Gegenstands nach Figur 3;
- Figur 6 in einer schematischen, perspektivischen Ansicht einer weiteren Ausführungsform des erfindungsgemäßen Spritzgusswerkzeugs;
- Figur 7 in einer schematischen Draufsicht ein Spritzgusswerkzeug gemäß Figur 6;
- Figur 8 in einer schematischen, teilgeschnittenen Seitenansicht eine erste Ausführungsvariante der Ausführungsform nach Figur 6;
- Figur 9 in einer schematischen Schnittansicht das Spritzgusswerkzeug gemäß Figur 8;
- Figur 10 in einer schematischen Schnittansicht einen Schlitten, der an einer Schiene angebracht ist;
- Figur 11 in einer schematischen Seitenansicht die Anordnung der Kugellager des Schlittens von Figur 10;
- Figur 12 in einer schematischen Draufsicht eine weite Ausführungsvariante der Ausführungsform nach Figur 6;
- Figur 13 in einer schematischen Draufsicht ein Spritzgusswerkzeug gemäß einer weiter geänderten Ausführungsform zum Werkzeug nach Figur 6;
- Figur 14 in einer schematischen Draufsicht ein Spritzgusswerkzeug gemäß noch einer weiteren Ausführungsform der Erfindung; und
- Figur 15 das Spritzgusswerkzeug von Figur 14 in einer schematischen Seitenansicht.

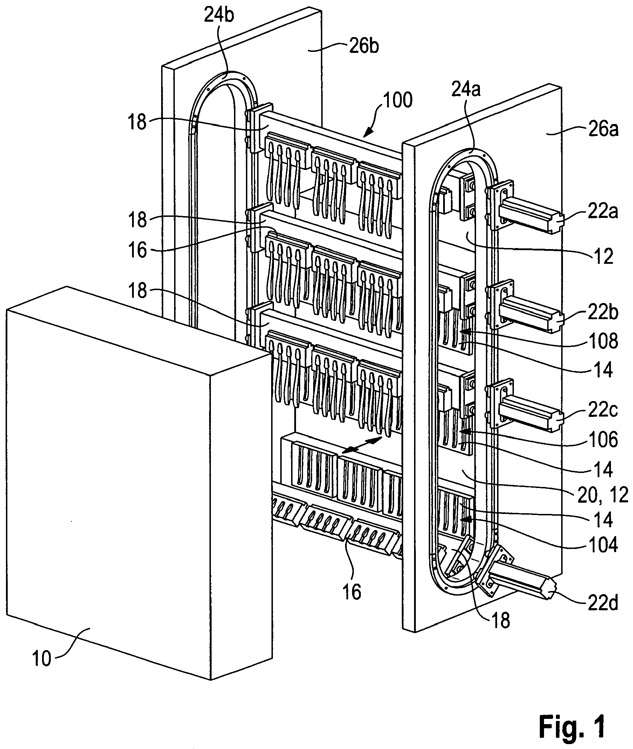

Die Ansicht auf das geöffnete Werkzeug in Figur 1 zeigt einen düsenseitigen feststehenden Formblock 10 und einen auswerfseitigen beweglichen Formblock 12. Es handelt sich bei der gezeigten Ausführungsform um ein Werkzeug zum Dreikomponenten-Spritzgießen von Zahnbürstenkörpern. Dies ist lediglich ein Beispiel; es können vielfältige Gegenstände aus mehr oder weniger als drei Komponenten gespritzt werden, z.B. Schreibgeräte, medizinische Gegenstände, Rasierklingenhalter und dergleichen.

Innenseitig tragen die Formblöcke 10 und 12 Formplatten mit zum Beispiel drei Gruppen von vertikal übereinander angeordneten Teilkavitäten, die bei geschlossenem Werkzeug drei Gruppen von Kavitäten bilden, die in jeder Gruppe parallel nebeneinander liegen, wobei die Längsrichtung der Kavitäten im dargestellten Beispiel senkrecht im Raume ist.

Jede Gruppe von Kavitäten bildet eine Spritzstation zum Spritzen einer der drei Komponenten.

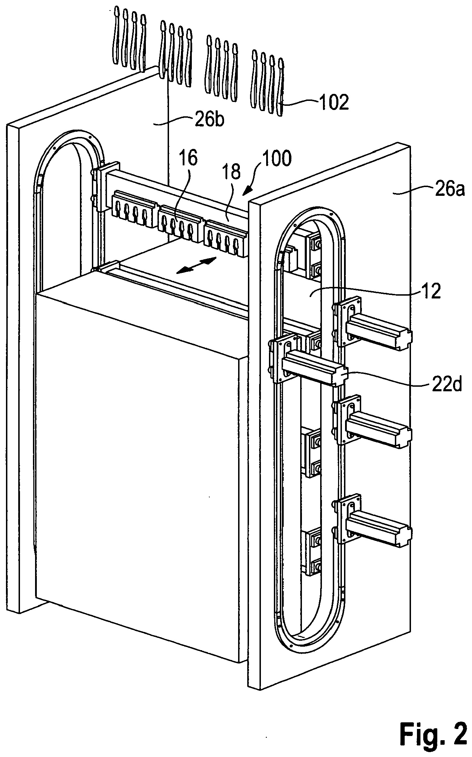

Außerhalb der Formblöcke und unmittelbar oberhalb der obersten Spritzstation befindet sich eine Auswerfstation 100, an der fertig gespritzte Gegenstände 102 bei geschlossenem Werkzeug ausgeworfen werden, wie in Figur 2 dargestellt.

Die Formplatten des beweglichen Formblocks 12 sind geteilt; ein unterer Teilbereich der Teilkavitäten ist in einem Formplattenbereich 14 gebildet, der fest an dem beweglichen Formblock 12 angebracht ist, und ein oberer Teilbereich ist in einem Formeinsatz 16 ausgebildet, der von einem Halter 18 getragen wird.

Der Formeinsatz 12 ist in eine Aussparung 20 im Formplattenbereich 14 passend einsetzbar.

Der Halter 18 zum Beispiel in Form einer länglichen Platte oder Leiste erstreckt sich quer über die Gruppe von Kavitäten und kann an jedem seiner äußeren Enden lösbar an ein Antriebssystem gekoppelt werden, das den Halter zwischen den Spritzstationen und der Auswerfstation bewegt.

Die Formblöcke 10, 12 mit Formplatten können aus einzelnen Teilen zusammengesetzt oder auch einstückig ausgebildet sein, ebenso wie die Kavitäten und Teilkavitäten oder die Aufteilung der Kavitäten in Teilbereiche durch die herzustellenden Gegenstände bestimmt werden.

Das Antriebssystem des Werkzeugs umfasst einzelne Servoantriebe 22a bis 22d, die für die Weiterbewegung der Halter 18 mit ihren Formeinsätzen 16 sorgen.

In der dargestellten, nicht einschränkend zu verstehenden Ausführungsform sind pro Spritzstation ein Servoantrieb 22a bis 22d sowie ein weiterer für die Auswerfstation vorgesehen.

Die Servoantriebe 22a - 22d sind frei programmierbar und laufen entlang einer geschlossenen Bewegungsbahn, die zum Beispiel durch Führungen 24a und 24b an zwei senkrechten voneinander beabstandeten Führungsplatten 26a und 26b gebildet sind. Dieses Beispiel für die Führungen soll jedoch nicht einschränkend zu verstehen sein.

Jeder der Servoantriebe 22a - 22d ist lösbar an einen der Halter 18 ankoppelbar.

In Figur 1 ist der Servoantrieb 22d an einen der Halter 18 angekoppelt und bewegt diesen auf die Ausnehmung 20 der untersten Spritzstation 104 zu, um ihn dort mit dem Formeinsatz 16 einzusetzen. Gleichzeitig hat der Servoantrieb 22c einen der Halter 18 aus der Ausnehmung der untersten Spritzstation 104 herausgehoben und über die Ausnehmung der mittleren Spritzstation 106 bewegt, um ihn dort abzusetzen, und gleichzeitig hat Servoantrieb 22b einen der Halter 18 aus der Ausnehmung der mittleren Spritzstation 106 herausgehoben und über die Ausnehmung der oberen Spritzstation 108 bewegt, um ihn dort abzusetzen, während der Servoantrieb 22a einen der Halter 18 aus der oberen Spritzstation 108 zur Auswerfstation 100 bewegt hat.

Mit jedem Halter 18 wird zumindest ein entsprechender Formeinsatz 16 bewegt, an dem Formlinge hängen. Bei der gezeigten Ausführung sind die Formlinge länglich, da Zahnbürstenkörper gespritzt werden, die mit ihrem Kopfbereich in den Teilkavitäten der Formeinsätze 16 sitzen und senkrecht von diesen herabhängen.

Das Antriebssystem mit seinen Servoantrieben 22a - 22d ist frei programmierbar, um die Halter 18 mit den Formeinsätzen 16 zwischen den Spritzstationen 104 - 108 und der Auswerfstation 100 zu bewegen, damit die in der untersten Spritzstation 104 mit der ersten Komponente 110 gespritzten Formlinge in die mittlere Spritzstation 106 umgelegt werden, während die in der mittleren Spritzstation 106 mit der ersten und der zweiten Komponente 110, 112 gespritzten Formlinge in die obere Spritzstation 108 umgelegt werden, um dort die dritte Komponente 114 zu spritzen, und um schließlich die fertigen Formlinge aus der oberen Spritzstation 108 zu der Auswerfstation 100 zu transportieren.

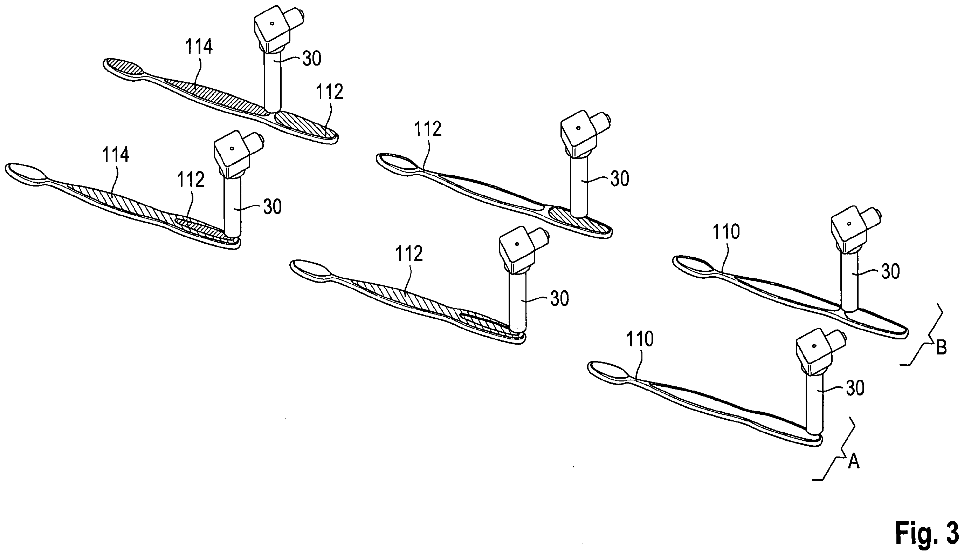

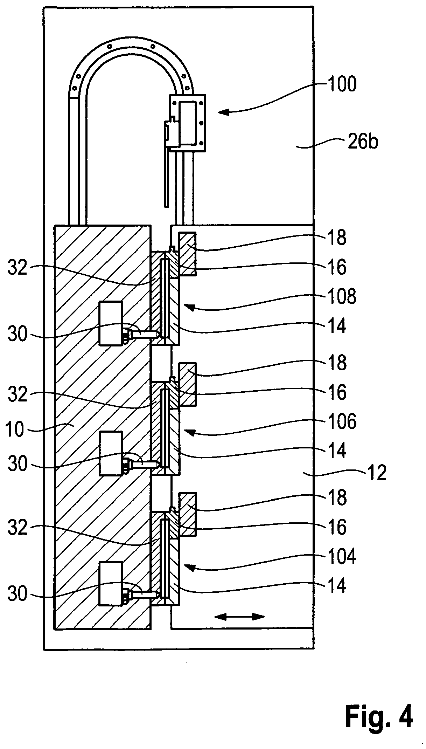

Wenn die Halter 18 mit ihren Formeinsätzen 16 weitergetaktet sind, fährt der vor dem Weitertakten nach hinten (siehe Pfeile in Figur 1) gefahrene Formblock 12 wieder nach vorne und bringt die Formeinsätze 14 wieder nach vorne und in die Ebene der und angrenzend zu den Formeinsätzen 16 (Figuren 3 und 4). Nach dem Spritzen fährt der Formblock 12 wieder nach rechts in die Stellung nach Figur 1, wobei die Formlinge aus den Formeinsätzen 16 herauswandern, jedoch in den Kavitäten der Formeinsätze 16 haften bleiben. Anschließend wird weitergetaktet.

Die nicht einschränkend zu verstehende senkrecht hängende Anordnung der Formlinge an den Formeinsätzen 16 in allen Bewegungsphasen von der ersten Spritzstation 104 bis zur Auswerfstation 100 erweist sich als vorteilhaft, weil die länglichen Formlinge niemals durch Schwerkraft bedingten Biegemomenten ausgesetzt sind. Besonders relativ dicke Formlinge neigen zu Biegeverformungen, solange sie nicht ausreichend abgekühlt sind. Die Anordnung aller Stationen des Werkzeugs senkrecht übereinander erlaubt kurze Wartezeiten zwischen den verschiedenen Spritzphasen und damit einen verkürzte Zykluszeit. Darüber hinaus ergibt die Anordnung aller Stationen des Werkzeugs senkrecht übereinander ein äußerst kompaktes Werkzeug mit kleinstmöglicher Stellfläche unabhängig von der Anzahl der Spritzstationen.

Die freie Programmierbarkeit des Antriebssystems erlaubt unterschiedliche Bewegungsmuster.

Wie aus der Zusammenschau der Figuren 1 und 2 ersichtlich, bewegt der Servoantrieb 22d den Halter 18 entlang der Führungen 24a und 24b von der Auswerfstation 100 zu der unteren Spritzstation 104, um den Halter 18 nach Auswerfen der fertigen Formlinge aus dem entsprechenden Formeinsatz 16 von der Auswerfstation 100 zu der unteren Spritzstation 104 zu bewegen. Von entscheidender Bedeutung ist, dass durch die freie Programmierbarkeit des Antriebssystems die Halter 18 mit Formeinsätzen 16 an beliebigen Positionen der Formplatte des beweglichen Formblocks 12 abgesetzt werden können, ohne dass Anschläge verstellt werden müssten. Dies soll nachfolgend unter Bezugnahme auf die Figuren 3 bis 5 näher erläutert werden.

In Figur 3 sind in einer schematischen Perspektivansicht zwei Ausführungen eines aus drei Komponenten 110 - 114 zu spritzenden Gegenstandes in Relation zu den Einspritzdüsen 30 im Formblock 10 für die jeweiligen Komponenten 110 - 114 dargestellt, nämlich anhand Zahnbürste A und anhand Zahnbürste B.

Unterschiedlich zwischen beiden Ausführungen ist die Aufteilung der drei Komponenten 110 - 114 auf den Bürstenkörper in dessen Längsrichtung. Diese unterschiedliche Aufteilung hat zwischen "Zahnbürste A" und "Zahnbürste B" verschiedene Positionen der Anspritzstellen innerhalb der Kavitäten zur Folge. Herkömmliche Werkzeuge zum Mehrkomponenten-Spritzgießen arbeiten mit fest vorgegebenen Indexschritten zwischen den verschiedenen Stationen, gleich ob die Indexschritte linear oder rotatorisch erfolgen. Daher erfordern Gegenstände mit verschiedenen Anspritzstellen innerhalb einer Kavität verschiedene Werkzeuge.

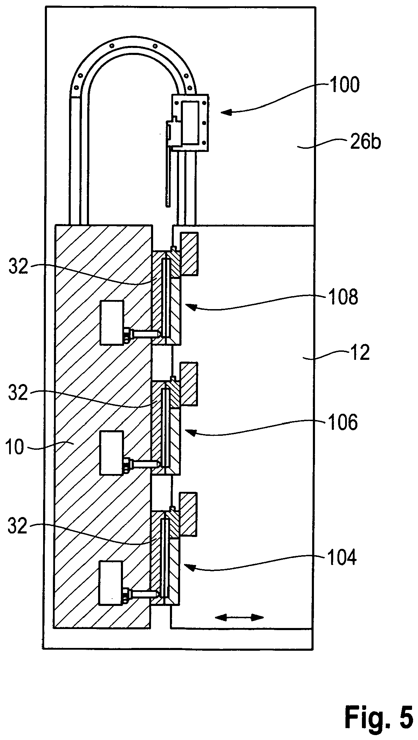

Mit dem erfindungsgemäßen Werkzeug können die Anspritzstellen innerhalb der Kavität variiert werden, wie in den Figuren 4 und 5 beispielhaft veranschaulicht, sodass die Indexschritte zwischen den benachbarten Stationen 100 bis 108 unterschiedlich groß sein können, zum Beispiel ist der Halter 18 von Station 104 zur Station 106 über eine kleinere Strecke verfahren worden als von Station 106 zu 108, da die Formeinsätze 14, 32 wegen der anderen Anspritzstellen innerhalb der Zahnbürste auch anders positioniert sind.

Wie der Vergleich der Figuren 4 und 5 zeigt, ist der feststehende Formblock 10 für beide Ausführungen "Zahnbürste A" (siehe Figur 4) und "Zahnbürste B" (siehe Figur 5) derselbe, nur die daran angebrachten Formplatten 32 sind verschieden und vor allen verschieden relativ zu den Spritzdüsen 30 positioniert. Entsprechend sind auch die Formplatten 14 sowie die Halter 18 und Einsätze 16 am beweglichen Formblock 12 unterschiedlich positioniert. Für die Umrüstung des Werkzeugs zwischen den beiden Ausführungen müssen selbstverständlich die Formplatten getauscht werden - was in der Natur der Sache liegt. Am Werkzeug selbst muss hingegen baulich nichts verändert werden, es genügt eine Umprogrammierung des Antriebssystems.

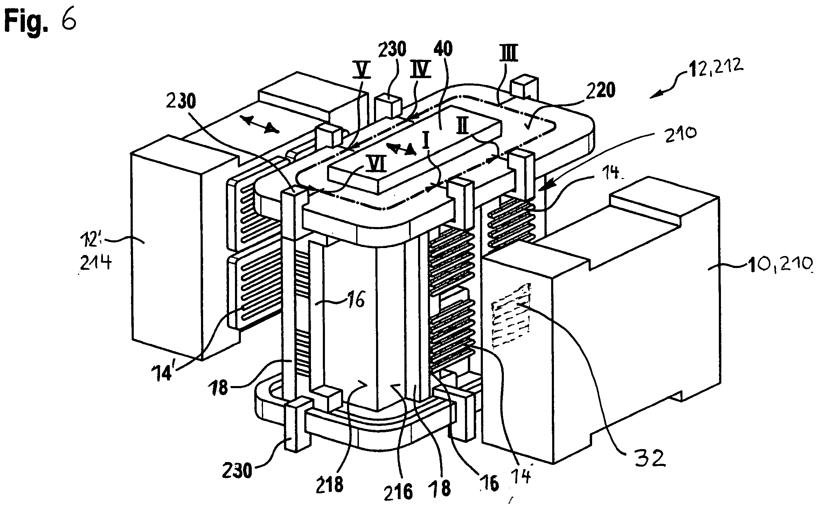

In Figur 6 ist schematisch ein Spritzgusswerkzeug gemäß einer weiteren ausführungsform gezeigt, das einen zentralen, beweglichen Formblock 12, im Folgenden Werkzeugteil 212 genannt, und zwei seitliche Formblöcke 10, 12', im Folgenden Werkzeugteile 210, 214 genannt, aufweist. Der Formblock 10 ist feststehend, der Formblock 12' beweglich. Das zentrale Werkzeugteil 212 ist allgemein blockförmig ausgeführt und weist insgesamt vier Seitenflächen auf, von denen hier nur zwei Seitenflächen 216, 218 sichtbar sind, sowie zwei Stirnseiten, von denen hier nur eine Stirnseite 220 sichtbar ist. An zwei der einander gegenüberliegenden Seitenflächen (hier der Seitenfläche 216 und der sich parallel dazu erstreckenden Seitenfläche) sind zentrale Formplatten mit Formplattenbereichen 14 angeordnet, die mit seitlichen Formplatten oder Formplattenbereichen 14 am Formblock 12' und Formplatten 32 am Formblock 10 zusammenwirken. Zusammen mit weiterverstellbaren Formeinsätzen 16 können Spritzgusskavitäten gebildet werden, wenn sich das Spritzgusswerkzeug in der geschlossenen Stellung befindet, also das zentrale Werkzeugteil 212 gegen das feststehende seitliche Werkzeugteil 210 und das zweite seitliche Werkzeugteil 214 gegen die zur Seitenfläche 216 parallele Seitenfläche des zentralen Werkzeugteils 212 gedrückt wird.

Der weiterverstellbare Formeinsatz 16 ist an einem Halter 18 angebracht, der sich entlang den Seitenflächen des zentralen Werkzeugteils von einer Stirnseite zur anderen Stirnseite erstreckt. An seinen Enden ist der Halter 18 jeweils mit einem Schlitten 230 verbunden. Die beiden seitlichen Werkzeugteile weisen entsprechende Ausnehmungen auf, in denen der Halter 18 aufgenommen ist, wenn sich das Spritzgusswerkzeug in einer geschlossenen Position befindet.

Wie in Figur 6 zu sehen ist, ist das Spritzgusswerkzeug mit mehreren Haltern 18 versehen. Diese können zwischen verschiedenen Positionen um die Seitenflächen des zentralen Werkzeugteils 212 herum verstellt werden. Ein Beispiel für den Umlauf der Halter 18 und damit der Formplatteneinsätze 16 zwischen verschiedenen Positionen ist in Figur 6 gezeigt. In einer ersten Position I kann beispielsweise eine erste Komponente gespritzt werden. Anschließend wird der Formplatteneinsatz 16 dort ausgehoben und in eine Position II weiterverstellt, in der eine zweite Komponente gespritzt wird. In einem nächsten Takt wird der Formplatteneinsatz 16 dort ausgehoben und in eine Position III verstellt, bei der es sich um eine Kühlstation handeln kann. Im nächsten Maschinentakt wird der Formplatteneinsatz 16 in eine Position IV weiterverstellt, in der beispielsweise eine dritte Komponente gespritzt werden kann. Im darauffolgenden Maschinentakt wird der Formplatteneinsatz 16 dort ausgehoben und in eine Position V weiterverstellt, in der eine vierte Komponente gespritzt werden kann. Im nächsten Maschinentakt wird der Formplatteneinsatz 16 (und damit die gespritzten Kunststoffteile) in Station V ausgehoben und in eine Position VI verstellt, bei der es sich um eine Auswurfstation handeln kann. Im Hinblick auf die Effizienz werden vorzugsweise so viele Halter und Formplatteneinsätze 16 verwendet, wie Stationen am Spritzgusswerkzeug vorhanden sind. Auf diese Weise kann mit jedem Maschinentakt eine Bearbeitung durchgeführt werden, beispielsweise ein Spritzgussvorgang oder ein Kühlvorgang.

Es ist auch möglich, andere Bearbeitungsstationen vorzusehen, beispielsweise eine Station, bei der zusätzliche Bauteile an den spritzgegossenen Bauteilen angebracht werden, oder eine Station zur mechanischen Bearbeitung der Spritzgussrohlinge. Es ist auch möglich, beispielsweise auf die bei Position III vorgesehene Station zu verzichten, sodass die Halter 18 unmittelbar von der Seitenfläche 216 auf die zweite, sich parallel dazu erstreckende Stirnseite verfahren werden. Es ist auch möglich, mit nur einer Station an einer der Seitenflächen oder an beiden Seitenflächen zu arbeiten.

Bei der in Figur 6 gezeigten Ausführungsform handelt es sich um ein Beispiel, das in vielerlei Hinsicht modifiziert werden kann. Beispielsweise können auf der Seitenfläche 216 und der sich parallel dazu erstreckenden Seitenfläche dieselben (also identische) zentralen Formplatten 14 angeordnet sein, die mit seitlichen Formplatten 14, 32 zusammenwirken, die an den seitlichen Werkzeugteilen 214 bzw. 210 angeordnet sind und wiederum untereinander identisch sind. Zusammen mit den Formplatteneinsätzen 16 werden also Spritzgusskavitäten gebildet, die alle identisch sind.

In Position III (Figur 6) wird dann eine Auswerfstation vorgesehen, ebenso wie in Position VI von Figur 6. Somit werden die Produkte, die an Position I und/oder an Position II gespritzt werden, in Position III ausgeworfen, und die Produkte, die in Position IV und/oder Position V gespritzt werden, werden in Position VI ausgeworfen. Hieraus ergibt sich, dass in einem Maschinentakt, also einem Spritzzyklus, sowohl auf der "Vorderseite" (nämlich der in Figur 6 sichtbaren Seitenfläche 216) als auch auf der "Rückseite" fertige Produkte erzeugt werden, die im nachfolgenden Maschinentakt an der entsprechenden Auswerfstation III oder VI ausgeworfen werden. Das Werkzeug wird dann als 1-Komponenten-Spritzgusswerkzeug betrieben.

Bei den vorhergehenden Beispielen wurde unterstellt, dass die Halter 18 immer in derselben Richtung verstellt werden, also umlaufend. Es ist aber auch möglich, die Halter hin- und zurückzufahren, wenn ein 1-Komponenten-Produkt hergestellt wird. Dann können die Formlinge, die beispielsweise in Position I gespritzt wurden, einmal in Position III ausgeworfen werden und einmal in Position VI, während die Formlinge von Position V einmal in Position VI und einmal in Position III ausgeworfen werden.

Wenn dagegen die Kavitäten in den Positionen I und IV miteinander identisch sind und auch die Kavitäten in den Positionen II und V miteinander identisch sind, dann werden sowohl auf der Vorderseite als auch auf der Rückseite 2-Komponenten-Produkte erzeugt.

Es ist zu sehen, dass die Halter 18 wenn sie von einer Station zur nächsten weiterverstellt werden, unterschiedliche Wege zurücklegen müssen. Die hierfür nötigen, variablen Schritt- oder Taktweiten (zuvor auch Indexschritte genannt) beim Verstellen zwischen den einzelnen Positionen sind möglich mittels eines in Figur 6 schematisch dargestellten Antriebssystems mit einem Antrieb 40, mit dem die Halter 18 gesteuert gekoppelt werden können. "Gesteuert gekoppelt" bedeutet, dass sie selektiv zu bestimmten Zeitpunkten mit dem Antrieb verbunden werden, sodass dieser die Halter 18 weiterverstellen kann, und sie ebenso selektiv wieder vom Antrieb gelöst werden können. Insbesondere findet eine Koppelung in einer ersten Position statt, und in einer zweiten Position wird die Koppelung zum Antrieb 40 wieder gelöst. Auf diese Weise können die Halter 18 mit unterschiedlichen Schrittweiten um die Seitenflächen des zentralen Werkzeugteils 212 herum weiterverstellt werden.

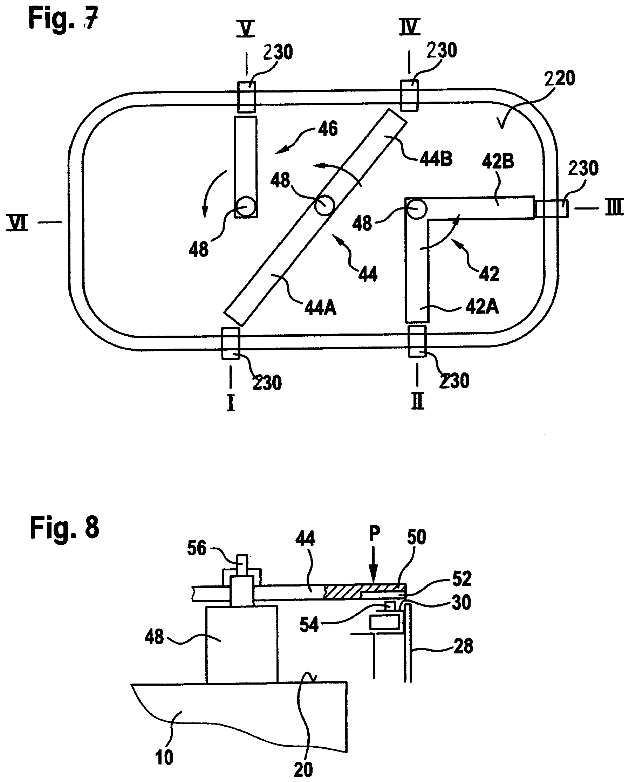

Eine erste Ausgestaltung des Antriebs 40 wird nachfolgend anhand des Figuren 7 bis 9 beschrieben.

Bei der ersten Ausführungsform weist der Antrieb 40 mehrere Schwenkarme 42, 44, 46 auf, die schwenkbar an der Stirnseite 220 des zentralen Werkzeugteils 212 angebracht sind. Bei der gezeigten Ausführungsform werden hierfür Aktoren 48 verwendet, die an der Stirnseite 220 angebracht sind und beispielsweise als Servomotor ausgeführt sein können. Mittels der Aktoren 48 kann jeder Schwenkarm aus der in Figur 7 gezeigten Stellung in der Richtung der Pfeile weiterverstellt werden. Auf diese Weise kann der Schlitten 230, der sich gerade in der Position I befindet, in die Position II weiterverstellt werden, während gleichzeitig der sich an der Position IV befindende Schlitten 230 in die Position V weiterverstellt wird. Gleichzeitig kann durch Verschwenken des Schwenkarms 46 der sich an der Position V befindende Schlitten 230 in die Position I weiterverstellt werden. Schließlich kann durch Verschwenken des Schwenkarms 42 der sich in der Position II befindende Schlitten in die Position III weiterverstellt werden, während der sich in der Position III befindende Schlitten in die Position IV weitergestellt wird.

Der Schwenkarm 42 ist als Doppelarm mit zwei Armen 42A, 42B ausgeführt, die hier im rechten Winkel zueinander angeordnet sind. Auch der Schwenkarm 44 ist ein Doppelarm, wobei seine beiden Arme 44A, 44B auf einer Linie angeordnet sind. Der Schwenkarm 46 ist dagegen einarmig ausgeführt.

In Abhängigkeit von den geometrischen Verhältnissen können die Schwenkarme 42, 44, 46 auch an anderen Stellen an der Stirnseite 220 angeordnet werden. Es ist auch möglich, bei den doppelarmigen Schwenkarmen die Arme in anderen Winkeln relativ zueinander anzuordnen, als dies für die Ausführungsform gemäß Figur 7 dargestellt ist.

Um die Schlitten 230 der Halter lösbar mit den Schwenkarmen zu koppeln, können die Schwenkarme 42, 44, 46 insgesamt einen Hub parallel zu ihrer Schwenkachse ausführen. Dies ist in Figur 8 für den Schwenkarm 44 gezeigt. Das außenliegende Ende 50 ist mit einer Nut 52 versehen, die auf einen Führungszapfen 54 aufgesetzt werden kann, der am Schlitten 230 vorgesehen ist. Sobald der entsprechende Schwenkarm in der Richtung des Pfeils P mit seinem außenliegenden Ende 50 auf den Schlitten 230 aufgesetzt ist, wird die Schwenkbewegung des Schwenkarms in eine Verstellbewegung des entsprechenden Schlittens übertragen. Dabei kann der Führungszapfen 54, bezogen auf die Schwenkachse des entsprechenden Schwenkarms, sich in radialer Richtung in der Nut 52 verstellen, sodass Änderungen des Abstands zwischen der Schwenkachse des entsprechenden Schwenkarms und der Position des Schlittens 230 ausgeglichen werden können.

Zur Verstellung des Schwenkarms 42, 44, 46 in vertikaler Richtung kann beispielsweise ein Aktor 56 verwendet werden, der schematisch in Figur 8 gezeigt ist. Ein vertikaler Hub des außenliegenden Endes 50 der Schwenkhebel kann aber auch konstruktiv in anderer Weise herbeigeführt werden. Es ist auch nicht unbedingt notwendig, jeweils den gesamten Schwenkarm anzuheben. Es kann ausreichend sein, lediglich das außenliegende Ende anzuheben. Außerdem kann die Verbindung zwischen dem Schlitten 230 und dem Schwenkarm in anderer Weise als durch Eingriff des Führungszapfens 54 in die Nut 52 bewerkstelligt werden.

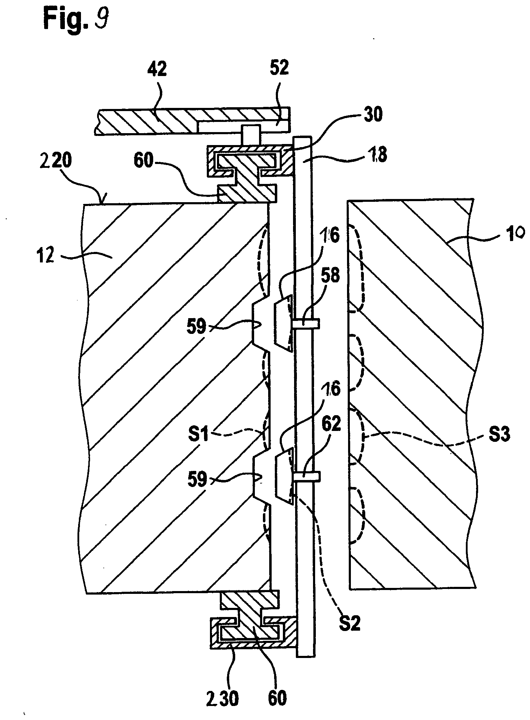

Anhand der Figuren 9 bis 11 wird nachfolgend beschrieben, wie die Formplatteneinsätze 16 am zentralen Werkzeugteil 212 angebracht sind.

Zur Führung der Schlitten 230 ist im Bereich jeder Stirnseite220 des zentralen Werkzeugteils 212 jeweils eine Schiene 60 angebracht. Diese kann beispielsweise mit der entsprechenden Stirnseite verschraubt sein. Die Querstrebe 28 ist an jedem ihrer Enden fest mit einem Schlitten 230 verbunden, der verschiebbar auf den beiden Schienen 60 geführt ist. An dem Halter 18 ist verschiebbar der Formplatteneinsatz 16 gelagert, beispielsweise mittels eines Zapfens 58, der in dem Halter 18 aufgenommen ist. Die Formplatteneinsätze 16 können in geeignete Vertiefungen 59 im zentralen Werkzeugteil 212 eingesetzt werden, sodass Spritzgusskavitäten gebildet sind, die aus einem zentralen Teil S1, S2 und einem außenliegenden Teil S3 bestehen.

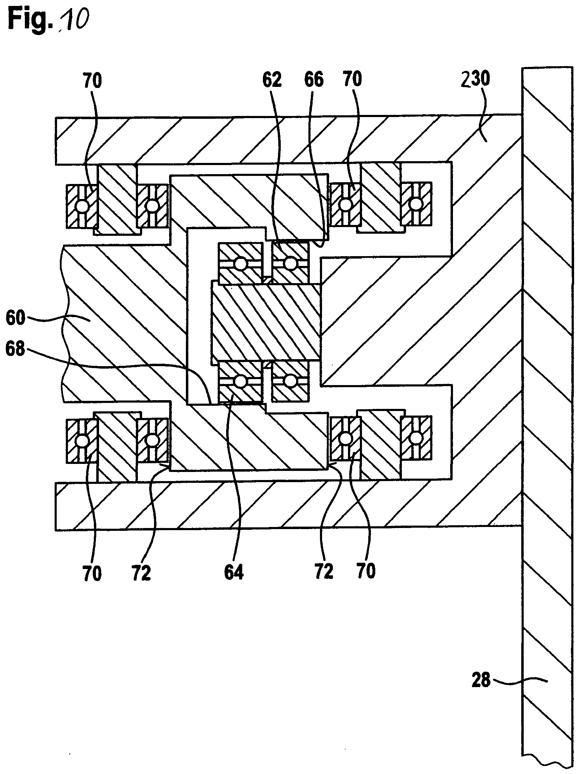

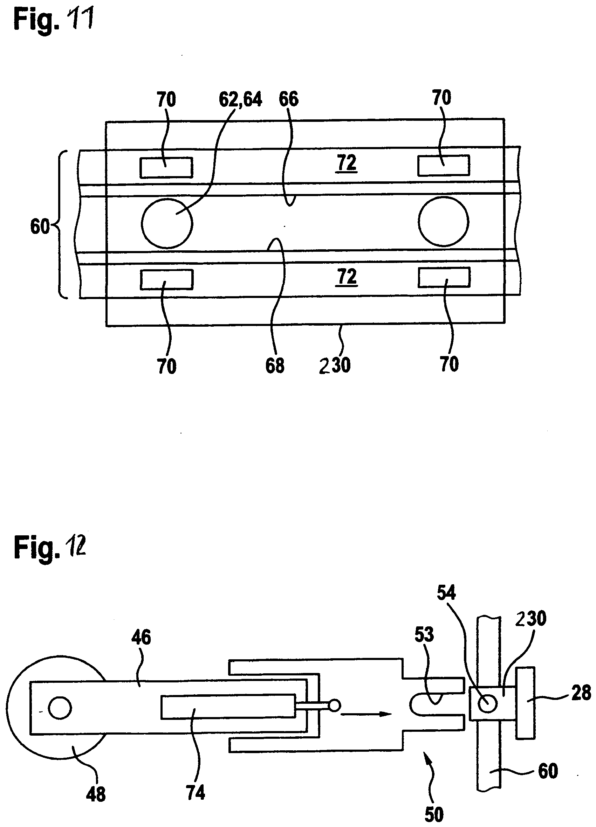

Zur Anbringung der Schlitten 230 an der Schiene 60 sind insbesondere Kugellager geeignet, mittels denen eine präzise Führung in vertikaler Richtung (bezogen auf die Darstellung von Figur 6) sowie in einer Richtung senkrecht zur Erstreckungsrichtung der Schiene 60 erzielt wird. Zur Führung in vertikaler Richtung wird ein Doppelkugellager verwendet, das durch zwei im Abstand voneinander angeordnete Radialkugellager 62, 64 gebildet ist. Diese laufen auf zwei in der Höhe gegeneinander versetzten Führungsbahnen 66, 68, sodass eine reibungsfreie Führung gewährleistet ist. Zur Führung in einer Richtung senkrecht zur Erstreckungsrichtung der Schiene 60 sind Horizontallager 70 vorgesehen, die an Laufflächen 72 angreifen. Wie in der schematischen Seitenansicht von Figur 11 gezeigt ist, weist jeder Schlitten den in Figur 10 gezeigten Lagersatz an zwei voneinander abgewandten Enden auf, sodass eine Kippstabilität um eine Achse parallel zur Erstreckungsrichtung des Halters 18 gegeben ist.

Obwohl in den Figuren 6 und 9 gezeigt ist, dass auch am unteren Ende des Halters 18 ein Schlitten 230 vorgesehen ist, der in einer Schiene 60 geführt ist, kann grundsätzlich auch vorgesehen sein, der Halter 18 freitragend nur mittels eines einzigen Schlittens zu lagern, wenn dieser eine ausreichend stabile Führung bereitstellt.

In Figur 12 ist eine alternative Ausführungsvariante der Schwenkarme gezeigt, die sich hinsichtlich der Koppelung mit den Schlitten 230 unterscheidet. Im Unterschied zu der in den Figuren 7 bis 9 gezeigten Ausführungsform wird hier keine vertikale, sondern eine radiale Bewegung verwendet, um den Schwenkarm mit dem Schlitten zu koppeln. Konkret ist das außenliegende Ende 50 teleskopisch verschiebbar angebracht, sodass es mittels eines schematisch dargestellten Stellzylinders 74 als Teil des Antriebssystems in der Richtung des Pfeils nach außen verschoben werden kann. Dadurch gelangt eine Gabel mit einem Schlitz 53 in Eingriff mit dem Führungszapfen 54 des entsprechenden Schlittens 230.

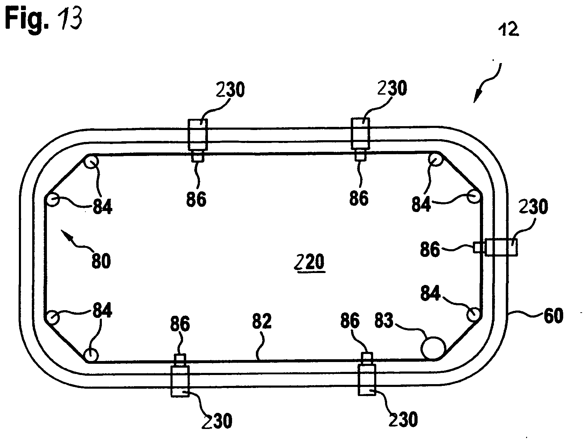

In den Figuren 13 bis 15 sind weitere Ausführungsformen gezeigt, die sich hinsichtlich der Art und Weise der Verstellung der Halter 18 entlang der Schiene 60 voneinander unterscheiden. Im Unterschied zur ersten Ausführungsform, bei der Schwenkarme zum Weiterverstellen der Schlitten 230 verwendet werden, wird bei der Ausführungsform gemäß der Figuren 13 bis 15 der Antrieb 40 durch Zugmitteltriebe 80 gebildet.

Die Zugmitteltriebe 80 sind bei den nachfolgend beschriebenen Ausführungsformen durch Riementriebe gebildet. Es können aber auch andere Zugmitteltriebe verwendet werden, die beispielsweise eine umlaufende Kette, ein Seil oder ein anderes Zugmittel verwenden.

Bei der Ausführungsform gemäß Figur 13 wird ein einziger umlaufender Riemen 82 verwendet, der entlang einer Antriebswalze 83 und mehrerer Umlenkrollen 84 in der Nähe der Schiene 60 geführt ist. Jeder Schlitten 230 ist mit einer Koppelvorrichtung 86 versehen, mittels der er gesteuert mit dem Riemen 82 gekoppelt werden kann. Die Koppelvorrichtung 86, die Teil des frei programmierbaren Antriebssystems bildet, kann durch eine Anlagefläche und einer mit dieser zusammenwirkenden Spannbacke gebildet sein, mit denen der entsprechende Schlitten 230 an den Riemen 82 gekoppelt werden kann, beispielsweise mittels eines Servomotors, eines elektromagnetischen Stelltriebs, mittels Federkraft oder pneumatisch.

Die Schlitten 230 können mittels des Riementriebs 80 in die jeweils nächste Position weiterverstellt werden. Dies kann dadurch geschehen, dass die Schlitten 230 mittels der Koppelvorrichtungen dann mit dem kontinuierlich umlaufenden Riemen 82 gekoppelt werden, wenn sie zwischen zwei Maschinentakten von einer Position in die nächste verstellt werden müssen. Sobald die nächste Position erreicht ist, werden die Schlitten dort abgekoppelt. Es ist auch möglich, die Schlitten 230 erst mit dem stehenden Riemen 82 zu koppeln und diesen dann anzutreiben.

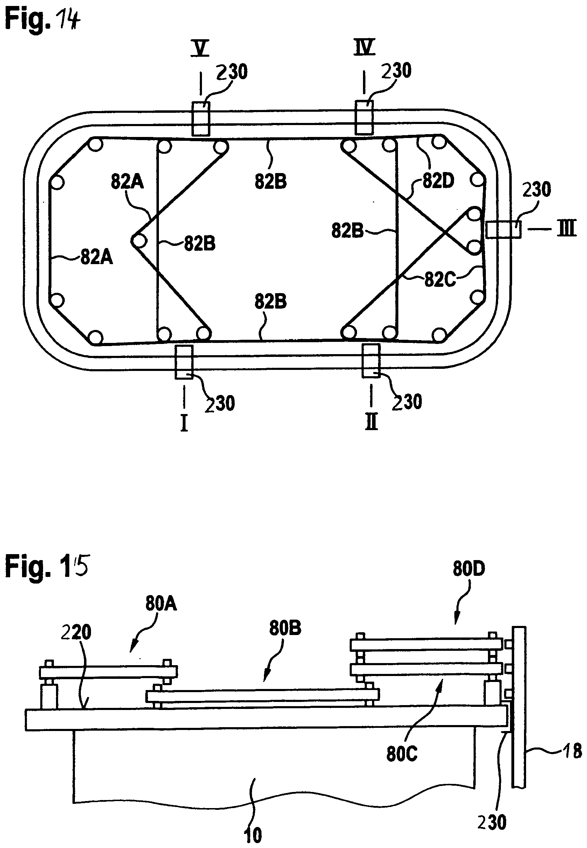

In den Figuren 14 und 15 ist eine dritte Ausführungsform gezeigt, die ebenso wie die zweite Ausführungsform einen Riementrieb als Antrieb 40 verwendet, jedoch hinsichtlich der Art und Weise, wie die Halter 18 weiterverstellt werden, Ähnlichkeit mit der ersten Ausführungsform habt. Bei der dritten Ausführungsform werden mehrere separate Riementriebe 80A, 80B, 80C und 80D verwendet, die jeweils zum Weiterverstellen zwischen zwei bestimmten Positionen vorgesehen sind, sodass eine "Übergabe" der Schlitten von Station zu Station zu einem anderen Riementrieb erfolgt. Aus der Position I wird ein Schlitten 230 mittels des Riemens 82B des Riementriebs 80B in die zweite Position II verstellt. Von dort kann er mittels des Riemens 82C des Riementriebs 80C in die Position III verstellt werden. Von dort ist es der Riemen 82D des Riementriebs 80D, der den Schlitten in die Position IV weiterverstellen kann. Dort kann er wiederum mit dem Riemen 82B des Riementriebs 80B gekoppelt werden, um in die fünfte Position zu gelangen. Zum Weiterverstellen aus der fünften Position in die Position I wird der Schlitten 30 mit dem Riemen 82A des Riementriebs 80A gekoppelt.

Den Ausführungsformen nach Figuren 6 bis 15 ist gemeinsam, dass die Halter 18 des jeweiligen Formplatteneinsatzes 16, hier konkret die Schlitten 230, lösbar mit einem Antrieb gekoppelt werden können, um sie aus einer Position in eine andere Position weiterzuverstellen, wodurch ein frei programmierbares Antriebssystem gebildet ist. Die lösbare Koppelung führt zu einer hohen Flexibilität, da das Spritzgusswerkzeug mit wenig Aufwand umgerüstet werden kann. Beispielsweise kann von einer Konstellation mit zwei verschiedenen Spritzstationen auf einer Seitenfläche 116 umgerüstet werden in eine Konfiguration mit nur einer einzigen Spritzposition, und der Antrieb kann mit wenig Aufwand so modifiziert werden, dass die Halter dann zwischen den in der neuen Konfiguration nötigen Positionen verstellt werden.

Ferner ist allen Ausführungsformen gemeinsam, dass, ohne Anschläge vorzusehen, die Antriebssysteme stets frei programmierbar sind, sodass die Positionen der Formplatteneinsätze 16 ebenfalls frei programmierbar und variierbar sind, sodass die Schrittlängen oder Indexschritte von Station zu Station unterschiedlich und individualisiert sind. Dies erfolgt durch frei programmierbare Antriebe selbst oder durch Koppelvorrichtungen, die frei programmierbar zu beliebigen Zeitpunkten oder an beliebigen Stellen den zugeordneten Halter mit dem sich bewegenden Teil, d.h. dem Antrieb, koppeln oder den Halter vom sich bewegenden Teil entkoppeln.

Auch bei den Ausführungsformen nach den Figuren 6 bis 16 sind die Formplatten 14, 16 und Formplatteneinsätze 16 gegen anders dimensionierte Formplatten 14, 16 und Formplatteneinsätze 16 austauschbar, sodass die Spritzdüsenposition im Formblock 12 jeweils gleich bleibt, aber bezogen auf den Formlinge anders liegen.

## Patentansprüche

1. Werkzeug zum Spritzgießen von Gegenständen, mit einem düsenseitigen feststehenden Formblock (10), an dem wenigstens eine Gruppe von Teilkavitäten gebildet ist, einem auswerfseitigen beweglichen Formblock (12), an dem wenigstens eine Gruppe von Teilkavitäten gebildet ist, die bei geschlossenem Werkzeug mit den Teilkavitäten des feststehenden Formblocks (10) Kavitäten zum Spritzgießen der Gegenstände bilden, und wenigstens einem Halter (18), der zwischen der durch die Kavitäten gebildeten Spritzstation (104 - 108) und einer Auswerfstation (100) auf einer vorgegebenen Bewegungsbahn bewegbar ist und in der Spritzstation (104 - 108) gespritzte Formlinge zur Auswerfstation (100) transportiert, wobei der Halter (18) durch ein programmierbares Antriebssystem bewegt wird und die Positionen des Halters (18) in der Spritzstation (104) und in der Auswerfstation (100) frei programmierbar sind, und wobei bei dem am feststehenden Formblock (10) auswechselbare, die Teilkavitäten aufweisende Formplatten (32) vorgesehen sind, wobei durch die Positionierung der Formplatten (32) an den Formblöcken (10) relativ zu den Spritzdüsen (32) die Position der durch die Spritzdüsen (32) fest vorgegebenen Anspritzstellen relativ zu den Kavitäten einstellbar sind.

2. Werkzeug nach Anspruch 1, das zumindest eines der folgenden Merkmale enthält:
- mehrere Gruppen von Kavitäten sind vorhanden,
- jede Gruppe von Kavitäten bildet eine Spritzstation,
- in den Spritzstationen werden jeweils verschiedene Komponenten gespritzt,
- je ein Halter (18) pro Spritzstation und ein weiterer Halter (18) sind vorgesehen,
- das Antriebssystem bewegt die Halter (18) programmgesteuert zwischen den Spritzstationen und der Auswerfstation.

3. Werkzeug nach Anspruch 2, bei dem die vorgegebene Bewegungsbahn der Halter (18) eine geschlossene Kurve bildet und/oder
bei dem die Spritzstationen (104 - 108) und die Auswerfstation (100) senkrecht übereinander angeordnet sind.

4. Werkzeug nach einem der vorhergehenden Ansprüche, bei dem das Antriebssystem mehrere individuell ansteuerbare Antriebe hat, insbesondere wobei jeder Spritzstation und der Auswerfstation ein Antrieb zugeordnet ist.

5. Werkzeug nach einem der vorhergehenden Ansprüche, bei dem das Antriebssystem einzelne Servoantriebe (22a, 22b, 22c, 22d) aufweist.

6. Werkzeug nach Anspruch 4 oder 5, bei dem die Antriebe lösbar an die Halter (18) ankoppelbar und/oder entlang der vorgegebenen Bewegungsbahn positionierbar sind oder dass das Antriebssystem wenigstens eine aktive Koppelvorrichtung umfasst, mit der die Halter (18) gesteuert mit einem Antrieb koppelbar sind.

7. Werkzeug nach Anspruch 5 oder 6, bei dem die Servoantriebe (22a, 22b, 22c, 22d) bei geschlossenem Werkzeug von den Haltern (18) abgekoppelt sind und entlang der vorgegebenen Bewegungsbahn positioniert werden können.

8. Werkzeug nach einem der vorhergehenden Ansprüche, bei dem die Antriebe (22a - 22c; 40) feststehend sind und der oder die Halter (18) von einer in die nachfolgende Station takten.

9. Werkzeug nach einem der vorstehenden Ansprüche, bei dem der Halter (18) bzw. die Halter (18) jeweils einen Formeinsatz trägt, an dem Teilbereiche der Teilkavitäten gebildet sind und der in eine Ausnehmung des beweglichen Formblocks (12) einsetzbar ist.

10. Werkzeug nach Anspruch 9, bei dem die Gegenstände länglich sind und die Spritzlinge senkrecht hängend an dem Formeinsatz gehalten werden.

11. Werkzeug nach einem der vorhergehenden Ansprüche, bei dem die Gegenstände Zahnbürstenkörper sind und die Teilbereiche der Teilkavitäten dem Kopfbereich einer Zahnbürste entsprechen.

12. Werkzeug nach einem der vorhergehenden Ansprüche, mit einem zentralen Formblock (12) und zwei seitlichen Formblöcken (10, 12'), die relativ zueinander zwischen einer geöffneten und einer geschlossenen Stellung verstellbar sind, wobei mindestens eine Kavität (S) vorgesehen ist, die durch eine Formplatte, die am zentralen Formblock (12) angeordnet ist, eine seitliche Formplatte (14, 32), die am seitlichen Formblock (10, 12') angeordnet ist, sowie wenigstens ein weiterverstellbarer Formeinsatz (16) definiert ist, der an einem Halter (18) angebracht ist, welcher um den zentralen Formblock (12) herum zwischen verschiedenen Spritzpositionen (I bis IV) mittels eines Antriebs (40) verstellbar ist, insbesondere wobei der Halter (18) gesteuert mit dem Antrieb (40) koppelbar ist.

13. Werkzeug nach Anspruch 12, bei dem die beiden seitlichen Formblöcke (10, 12') mit zwei Seitenflächen (216) des zentralen Formblocks (12) zusammenwirken und wobei der Antrieb (40) an einer Stirnseite (220) des zentralen Formblocks (12) angeordnet ist.

14. Werkzeug nach Anspruch 12 oder 13, bei dem das Antriebssystem wenigstens eine Koppelvorrichtung für jeden Halter (18) umfasst, mit dem der Halter (18) individuell mit einem Antrieb an- und abkoppelbar ist, um frei programmierbare Spritzpositionen (I - IV) anzufahren.

## Claims

1. A tool for injection molding of objects, comprising a nozzle-side, stationary mold block (10) at which at least one group of partial cavities is formed, an ejection-side, movable mold block (12) at which at least one group of partial cavities is formed which, when the tool is closed, form cavities with the partial cavities of the stationary mold block (10) for injection molding the objects, and at least one holder (18) which is movable on a predefined movement path between the injection station (104 - 108) formed by the cavities and an ejection station (100) and transports molded parts injection molded in the injection station (104 - 108) to the ejection station (100), wherein the holder (18) is moved by a programmable drive system, and the positions of the holder (18) in the injection station (104) and in the ejection station (100) are freely programmable, and wherein exchangeable mold plates (32) including the partial cavities are provided at the stationary mold block (10), wherein the positions of the injection points fixedly predefined by the injection nozzles (32) relative to the cavities are adjustable by the positioning of the mold plates (32) at the mold blocks (10) relative to the injection nozzles (32).

2. The tool according to claim 1, which includes at least one of the following features:
- a plurality of groups of cavities is provided;
- each group of cavities constitutes an injection station;
- respective different components are injected in the injection stations;
- one holder (18) for each injection station and one further holder (18) are provided;
- the drive system moves the holders (18) in a program-controlled manner between the injection stations and the ejection station.

3. The tool according to claim 2, wherein the predefined movement path of the holders (18) constitutes a closed curve, and/or
wherein the injection stations (104 - 108) and the ejection station (100) are arranged vertically above each other.

4. The tool according to any of the preceding claims, wherein the drive system has a plurality of drives adapted to be driven individually, in particular each injection station and the ejection station having a drive associated therewith.

5. The tool according to any of the preceding claims, wherein the drive system includes individual servo drives (22a, 22b, 22c, 22d).

6. The tool according to claim 4 or 5, wherein the drives are adapted to be releasably coupled to the holders (18) and/or adapted to be positioned along the predefined movement path, or the drive system comprises at least one active coupling device by means of which the holders (18) can be coupled to a drive in a controlled manner.

7. The tool according to claim 5 or 6, wherein when the tool is closed, the servo drives (22a, 22b, 22c, 22d) are uncoupled from the holders (18) and can be positioned along the predefined movement path.

8. The tool according to any of the preceding claims, wherein the drives (22a - 22c; 40) are stationary, indexing the holder(s) (18) from one to the subsequent station.

9. The tool according to any of the preceding claims, wherein the holder (18) or holders (18) each carries a mold insert on which partial portions of the partial cavities are formed and which is adapted to be inserted into a recess of the movable mold block (12).

10. The tool according to claim 9, wherein the objects are oblong and the injection molded parts are held in a vertically suspended manner at the mold insert.

11. The tool according to any of the preceding claims, wherein the objects are toothbrush bodies and the partial portions of the partial cavities correspond to the head portion of a toothbrush.

12. The tool according to any of the preceding claims, comprising a central mold block (12) and two lateral mold blocks (10, 12') which are adjustable relative to each other between an open and a closed position, at least one cavity (S) being provided which is defined by a mold plate arranged at the central mold block (12), a lateral mold plate (14, 32) arranged at the lateral mold block (10, 12'), and at least one indexable mold insert (16) which is mounted to a holder (18) which is adjustable between different injection positions (I to IV) around the central mold block (12) by means of a drive (40), the holder (18) more particularly being adapted to be coupled to the drive (40) in a controlled manner.

13. The tool according to claim 12, wherein the two lateral mold blocks (10, 12') cooperate with two lateral faces (216) of the central mold block (12), and the drive (40) being arranged on a face side (220) of the central mold block (12).

14. The tool according to claim 12 or 13, wherein the drive system comprises at least one coupling device for each holder (18), by means of which the holder (18) can be individually coupled to and uncoupled from a drive in order to move to freely programmable injection positions (I - IV).

## Revendications

1. Outil de moulage d'objets par injection, présentant un bloc de moule stationnaire (10) côté buse sur lequel est réalisé au moins un groupe de cavités partielles, un bloc de moule mobile (12) côté éjection sur lequel est réalisé au moins un groupe de cavités partielles lesquelles, lorsque l'outil est fermé, forment ensemble avec les cavités partielles du bloc de moule stationnaire (10) des cavités pour le moulage des objets par injection, et au moins un support (18) qui est mobile selon une voie de déplacement prédéterminée entre une station d'injection (104-108) formée par les cavités et une station d'éjection (100) et qui transporte des ébauches moulées par injection dans la station d'injection (104-108) vers la station d'éjection (100), le support (18) étant déplacé par un système d'entraînement programmable, et les positions du support (18) dans la station d'injection (104) et dans la station d'éjection (100) étant aptes à être programmées librement, et des plaques de moule (32) échangeables présentant des cavités partielles étant prévues sur le bloc de moule stationnaire (10), les positions des points d'injections fixement prédéterminées par les buses d'injection (32) par rapport aux cavités étant ajustables grâce au positionnement des plaques de moule (32) sur les blocs de moule (10) par rapport aux buses d'injection (32).

2. Outil selon la revendication 1, présentant au moins l'une des caractéristiques suivantes :
- plusieurs groupes de cavités sont présents,
- chaque groupe de cavités forme une station d'injection,
- différents composants sont respectivement injectés dans les stations d'injection,
- il est prévu un support (18) par station d'injection et un autre support (18),
- le système d'entraînement déplace les supports (18) entre les stations d'injection et la station d'éjection de manière commandée par programme.

3. Outil selon la revendication 2, dans lequel la voie de déplacement prédéterminée des supports (18) constitue une courbe fermée et/ou
les stations d'injection (104-108) et la station d'éjection (100) sont agencées perpendiculairement les unes au-dessus des autres.

4. Outil selon l'une des revendications précédentes, dans lequel le système d'entraînement présente plusieurs entraînements individuellement pilotables, un entraînement étant en particulier respectivement associé à chaque station d'injection et à la station d'éjection.

5. Outil selon l'une des revendications précédentes, dans lequel le système d'entraînement présente plusieurs entraînements d'asservissement (22a, 22b, 22c, 22d).

6. Outil selon la revendication 4 ou 5, dans lequel les entraînements sont aptes à être couplés aux supports (18) de manière détachable et/ou à être positionnés le long de la voie de déplacement prédéterminée, ou dans lequel le système d'entraînement présente au moins un dispositif de couplage actif au moyen duquel les supports (18) sont aptes à être couplés à un entraînement de manière commandée.

7. Outil selon la revendication 5 ou 6, dans lequel les entraînements d'asservissement (22a, 22b, 22c, 22d) sont découplés des supports (18) et sont aptes à être positionnés le long de la voie de déplacement prédéterminée lorsque l'outil est fermé.

8. Outil selon l'une des revendications précédentes, dans lequel les entraînements (22a-22c ; 40) sont stationnaires et cadencent le ou les supports (18) d'une station à une station subséquente.

9. Outil selon l'une des revendications précédentes, dans lequel le support (18) ou les supports (18) portent chacun un insert de moule sur lequel sont réalisées des zones partielles des cavités partielles et qui est apte à être inséré dans un évidement du bloc de moule mobile (12).

10. Outil selon la revendication 9, dans lequel les objets sont allongés et les ébauches sont retenues de manière perpendiculairement suspendue à l'insert de moule.

11. Outil selon l'une des revendications précédentes, dans lequel les objets sont des corps de brosse à dents et les zones partielles des cavités partielles correspondent à la zone de tête d'une brosse à dents.

12. Outil selon l'une des revendications précédentes, comportant un bloc de moule central (12) et deux blocs de moule latéraux (10, 12') qui sont ajustables les uns par rapport aux autres entre une position ouverte et une position fermée, au moins une cavité (S) étant prévue laquelle est définie par une plaque de moule qui est agencée sur le bloc de moule central (12), une plaque de moule latérale (14, 32) qui est agencée sur le bloc de moule latéral (10, 12'), et au moins un insert de moule (16) déplaçable qui est agencé sur un support (18) qui est apte à être déplacé autour du bloc de moule central (12) entre différentes positions d'injection (I à IV) au moyen d'un entraînement (40), le support (18) étant en particulier apte à être couplé à l'entraînement (40) de manière commandée.

13. Outil selon la revendication 12, dans lequel les deux blocs de moule latéraux (10, 12') coopèrent avec deux faces latérales (216) du bloc de moule central (12), et l'entraînement (40) étant agencé sur une face frontale (220) du bloc de moule central (12).

14. Outil selon la revendication 12 ou 13, le système d'entraînement comprenant au moins un dispositif de couplage pour chaque support (18) au moyen duquel le support (18) peut être individuellement couplé à un entraînement ou être découplé de celui-ci pour se déplacer en direction de positions d'injection (I-IV) librement programmables.
